# EUROPÄISCHE PATENTSCHRIFT

(11) **EP 3 372 754 B1**
(45) Veröffentlichungstag und Bekanntmachung des Hinweises auf die Patenterteilung: **08.12.2021**
(21) Anmeldenummer: 17160235.2
(22) Anmeldetag: 10.03.2017
(51) Int. Cl.: E04H 15/08, B60P 3/32, E04H 15/20

(54) **VORZELT FÜR EIN FAHRZEUG, INSBESONDERE FÜR EINEN WOHNWAGEN ODER EIN WOHNMOBIL**
AWNING FOR A VEHICLE, IN PARTICULAR FOR A CARAVAN OR FOR A MOBILE HOME
AUVENT POUR VÉHICULE, EN PARTICULIER POUR UNE CARAVANE OU UN CAMPING-CAR

(43) Veröffentlichungstag der Anmeldung: 12.09.2018
(60) Teilanmeldung: 21200740.5
(73) Patentinhaber: Fiamma S.p.A., 21010 Cardano al Campo (VA) (IT)
(72) Erfinder: POZZI, John-David, 8004 Zürich (CH); POZZI, Charles Philip, 20129 Mailand (IT)
(74) Vertreter: Kluin, Jörg-Eden

(56) Entgegenhaltungen:
- WO-A1-2007/096653
- CN-U- 205 046 936
- DE-C1- 4 211 308
- US-A- 2 591 829

## Beschreibung

Die Erfindung betrifft ein Vorzelt für ein Fahrzeug, insbesondere für einen Wohnwagen oder ein Wohnmobil, welches über einem Untergrund einen zusätzlichen geschützten Bereich zu dem Fahrzeug bildet, mit einem röhrenförmigen Rahmen, der zur Ausbildung von Stabilität mittels eines gegenüber einem Umgebungsdruck unter einem Überdruck befindlichen Gases aufblasbar ist, wobei der röhrenförmige Rahmen zumindest einen ersten Röhrenbereich einer ersten Länge umfasst, der sich vorzugweise entfernt von dem Fahrzeug vom Untergrund nach oben erstreckt.

Ein derartiges Vorzelt ist aus der GB 2 490 003 B1 bekannt.

Der Vorteil dieses Vorzelts gegenüber einem solchen, welches einen herkömmlichen Rahmen aus Zeltstangen oder -röhren aus einem festen Material, basierend beispielsweise auf Eisen, Aluminium oder glasfaserverstärktem Kunststoff umfasst, ist, dass der Aufbau drastisch vereinfacht ist, indem hierzu lediglich unter Druck stehendes Gas - beispielsweise mittels einer Luftpumpe bereitgestellte Druckluft - in den röhrenförmigen Rahmen eingeleitet werden muss, wohingegen bei herkömmlichen Vorzelten der Rahmen aus einer Mehrzahl von "Zeltstangen" zusammengesteckt werden muss, wobei auf die richtige Reihenfolge und Anordnung der einzelnen Zeltstangen zu achten ist. Der Aufbau solcher Zelte ist daher vergleichsweise aufwändig.

Ein weiterer Vorteil des Vorzeltes mit aufblasbarem Rahmen ist dessen regelmäßig geringeres Packmaß und geringeres Gewicht gegenüber einem herkömmlichen Vorzelt.

Nachteilig ist jedoch, dass das aus der GB 2 490 003 B1 vorbekannte Vorzelt nicht größenvariabel ist, insbesondere nicht an unterschiedlich hohe Fahrzeuge anpassbar ist.

Es sind weitere derart aufgebaute Zelte bekannt, beispielsweise aus der US 2 591 829 A, welche ein Vorzelt nach dem Oberbegriff von Anspruch 1 zeigt. Das hieraus bekannte Zelt ist als solches durch eine Modulbauweise zwar längenveränderbar und dadurch größenvariabel. Dennoch ist auch dieses Zelt aufgrund seiner Ausgestaltung nicht höhenvariabel ausgebildet und folglich auch nicht an unterschiedlich hohe Fahrzeuge anpassbar. Ferner ist ein solches Zelt aus der WO 2007 / 096653 A1 bekannt. Bei diesen Zelten erfolgt eine Verlängerung bzw. Vergrößerung des Zelts jedoch wiederum durch ein Aneinanderreihen separater Röhrenabschnitte, so dass auch diese Zelte eine Vielzahl einzelner Bauteile und/oder Baugruppen aufweisen, welches aus den oben genannten Gründen als nachteilig angesehen wird.

Der Erfindung liegt daher die Aufgabe zugrunde, die bekannten, eingangs zitierten Vorzelte hinsichtlich dieser Nachteile zu verbessern.

Diese Aufgabe wird durch das in Anspruch 1 wiedergegebene Vorzelt gelöst.

Bei diesem Vorzelt, welches vorzugsweise zumindest einen zweiten Röhrenbereich einer zweiten Länge, der sich zwischen dem ersten Röhrenbereich und dem Fahrzeug erstrecken kann, umfasst, sind erfindungsgemäß Mittel zur Längenveränderung zumindest eines des ersten Röhrenbereichs und zweiten Röhrenbereichs vorgesehen. Die Mittel zur Längenveränderung umfassen erfindungsgemäß einen dritten Röhrenbereich mit zwei voneinander entfernten ersten und zweiten Enden. An dem ersten Ende ist mindestens ein erstes Verbindungsmittel und an dem zweiten Ende mindestens ein zweites Verbindungsmittel vorgesehen. Die ersten und zweiten Verbindungsmittel sind komplementär ausgebildet, so dass die ersten und zweiten Enden des dritten Röhrenbereichs wahlweise mittels der ersten und zweiten Verbindungsmittel miteinander verbindbar und voneinander trennbar sind.

Ohne dass es hierzu dem Einsatz zusätzlicher und/oder anders dimensionierter Bauteile bedarf, lässt sich das erfindungsgemäße Vorzelt somit an verschiedene Fahrzeuge im Sinne einer maximalen Höhenausnutzung anpassen. Auch kann bei einem erfindungsgemäßen Vorzelt - sofern die Höhe, in welcher es an das Fahrzeug angrenzt, konstant gehalten wird und sich der erste Röhrenbereich entfernt vom Fahrzeug vom Untergrund nach oben erstreckt - der Neigungswinkel des den Untergrund abdeckenden Bereichs des Vorzelts gegenüber dem Fahrzeug verändert werden, wenn dies beispielsweise aufgrund äußerer Umstände oder Einflüsse wünschenswert erscheint.

Umfasst der zweite Röhrenbereich - falls vorhanden - Mittel zur Längenveränderung, so kann die von dem Vorzelt überdeckte Fläche des Untergrundes variiert werden. Dies kann insbesondere dann von Vorteil sein, wenn die zum Aufbau des Vorzelts zur Verfügung stehende Grundfläche - beispielsweise aufgrund einer geringen Stellplatzgröße - beschränkt ist.

Hierzu sind vorzugsweise das erste Verbindungsmittel ein erster Teil und das zweite Verbindungsmittel ein zum ersten Teil komplementärer Teil beispielsweise eines Klettverschlusses, einer Druckknopfverbindung, einer Haken/Ösenverbindung oder eines Reißverschlusses. Grundsätzlich sind als Verbindungmittel alle bekannten technischen Lösungen geeignet und als von der Erfindung erfasst anzusehen, die eine lösbare Verbindung der ersten und zweiten Enden des dritten Röhrenbereichs erlauben.

Bevorzugt ist des Weiteren eine Weiterbildung des erfindungsgemäßen Vorzelts, bei welcher zumindest einer des ersten und des zweiten Röhrenbereichs mindestens zwei in Richtung der Länge des jeweiligen Bereichs voneinander beabstandete Mittel zur Längenveränderung aufweist. Der jeweilige Röhrenbereich kann aufgrund dieser Ausgestaltung dann in zumindest zwei Stufen längenverändert werden. Die Anpassbarkeit des Vorzelts an unterschiedliche Fahrzeughöhen und/oder Grundflächengrößen ist somit nochmals erhöht.

Auch ist eine Weiterbildung bevorzugt, bei welcher das Vorzelt mehrere Module mit jeweils einem eigenen röhrenförmigen Rahmen, der zur Ausbildung von Stabilität mittels eines gegenüber dem Umgebungsdruck unter einem Überdruck befindlichen Gases aufblasbar ist, umfasst, wobei der Rahmen eines jeden Moduls zumindest einen ersten Röhrenbereich umfasst, und wobei die Module vorzugsweise mit Hilfe von komplementären Anschlussmitteln miteinander verbindbar und voneinander trennbar sind. Aufgrund dieser Weiterbildung ist das erfindungsgemäße Vorzelt nochmals größenvariabler ausgebildet. So kann es durch Zusammenfügen eines oder mehrerer Module beispielsweise an unterschiedliche Fahrzeuglängen angepasst werden.

Die komplementären Anschlussmittel der einzelnen Module können wiederum Teile eines Klettverschlusses, einer Druckknopfverbindung, einer Haken-Ösenverbindung oder eines Reißverschlusses sein. Darüber hinaus von der Erfindung erfasst sind auch alle anders gestalteten Anschlussmittel, mit denen die einzelnen Module verbindbar oder voneinander trennbar sind.

Des Weiteren bevorzugt ist eine Ausführungsform des erfindungsgemäßen Vorzelts, welches vorzugsweise mindestens einen am fahrzeugseitigen Ende des mindestens einen zweiten Rohrbereichs vorgesehenen Stützpfosten umfasst. Dieser Stützpfosten verleiht dem Vorzelt eine selbständige, d.h. nicht vom Vorhandensein des Fahrzeugs abhängige Standfunktion. Das Vorzelt kann somit an einem gewählten Standort verbleiben, wenn das Fahrzeug vorübergehend entfernt wird.

Besonders bevorzugt ist es, wenn der mindestens eine Stützpfosten röhrenförmig ausgebildet und zur Ausbildung seiner Stabilität mittels eines gegenüber dem Umgebungsdruck unter einem Überdruck befindlichen Gases aufblasbar ist. Der mindestens eine Stützpfosten umfasst dann ebenfalls keine mechanisch starren, ein großes Packmaß aufweisende Teile und kann bei entsprechender Ausbildung mit derselben Druckluftquelle wie der Rahmen des Vorzeltes, beispielsweise einer Luftpumpe mit Druckluft zur Ausbildung seiner Stabilität aufgeblasen werden.

Da der Stützpfosten regelmäßig nicht benötigt wird, wenn das Fahrzeug vom Vorzelt nicht entfernt werden soll, ist dieser vorzugsweise mit Befestigungsmitteln wahlweise vorzugsweise an dem zweiten Röhrenbereich befestigbar und von dem zweiten Röhrenbereich trennbar.

Hierzu können die Befestigungsmittel ― besonders bevorzugt ― einen Klettverschluss, eine Druckknopfverbindung, eine Haken-Ösenverbindung, einen Reißverschluss oder andere Mittel umfassen.

Die Erfindung soll nun anhand der beigefügten Figuren, in denen Ausführungsbeispiele eines erfindungsgemäßen Vorzelts schematisch dargestellt sind, weiter verdeutlicht werden. Es zeigen:
- Fig. 1: ein erstes Ausführungsbeispiel eines erfindungsgemäßen Vorzelts, dessen zweites Ende des zweiten Röhrenbereichs, welches an einem Fahrzeug anliegt, eine maximale Höhe H1 aufweist, in Fahrtrichtung des Fahrzeugs;
- Fig. 2: das in Fig. 1 dargestellte Ausführungsbeispiel in einer entsprechenden Ansicht, bei welchem jedoch aufgrund der Mittel zur Längenveränderung die maximale Höhe des zweiten Endes des zweiten Röhrenbereichs auf eine Höhe H2 erhöht worden ist;
- Fig. 3: das in den Fig. 1 und 2 dargestellte Ausführungsbeispiel, wobei jedoch durch Aktivieren von zweiten Mitteln zur Längenveränderung die maximalen Höhen des zweiten Endes des zweiten Röhrenbereichs auf eine Höhe H3 erhöht ist;
- Fig. 4: ein weiteres Ausführungsbeispiel einer erfindungsgemäßen Markise in einer in Fig. 1 bis 3 entsprechenden Ansicht, bei dem ein Stützpfosten vorgesehen ist; sowie
- Fig. 5: ein weiteres Ausführungsbeispiel einer erfindungsgemäßen Markise in einer Seitenansicht (Ansicht A in Fig. 1), welches zur Anpassung der Länge des Vorzeltes modular aufgebaut ist.

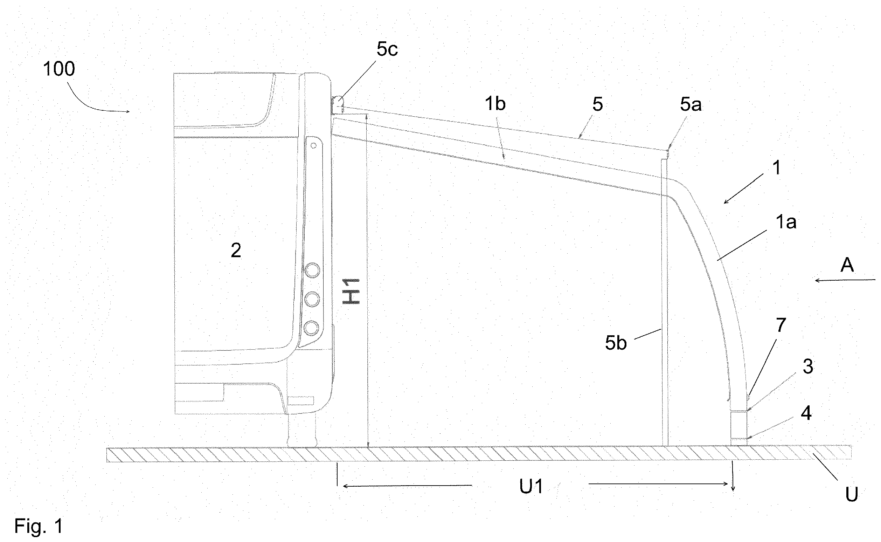

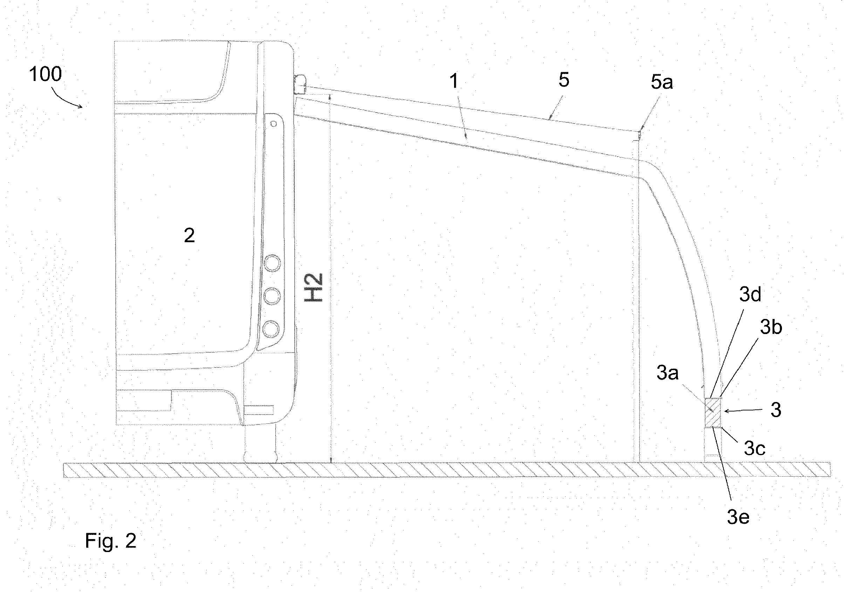

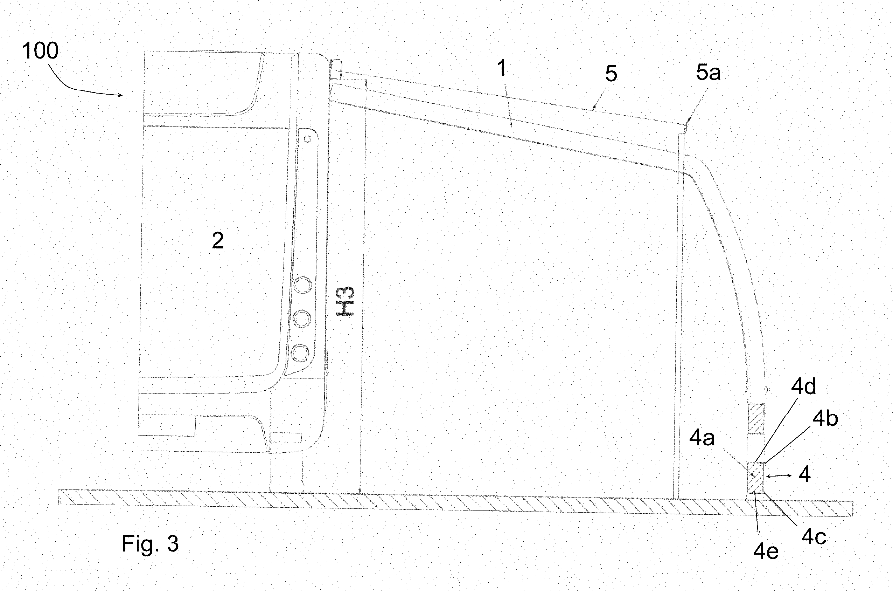

Das in den Fig. 1 bis 3 dargestellte und mit 100 bezeichnete, erste Ausführungsbeispiel eines erfindungsgemäßen Vorzeltes für ein Fahrzeug 2 zur Ausbildung eines zusätzlichen geschützten Bereichs U1 über einem Untergrund U umfasst einen röhrenförmigen Rahmen 1, der zur Ausbildung von Stabilität mittels eines gegenüber einem Umgebungsdruck unter einem Überdruck befindlichen Gases aufblasbar ist. Hierzu umfasst der Rahmen 1 beispielsweise eine Ventilanordnung 7, an welche zur Bereitstellung des unter Überdruck befindlichen Gases eine in der Zeichnung nicht dargestellte Luftpumpe anschließbar ist. Bei der Ventilanordnung 7 kann es sich um ein Rückschlagventil handeln, welches selbsttätig gegen den Überdruck im Innern des Rahmens schließt, welches aber zum Ablassen des Überdrucks manuell geöffnet werden kann.

Der Rahmen 1 umfasst einen ersten Röhrenbereich 1a, der sich entfernt vom Fahrzeug 2 vom Untergrund U nach oben erstreckt. An diesem ersten Röhrenbereich 1a, der bei dem in der Zeichnung dargestellten Ausführungsbeispiel nach außen gewölbt ausgebildet ist, schließt sich ein zweiter Röhrenbereich 1b an, der sich vom oberen Ende des ersten Röhrenbereichs bis zu dem Fahrzeug 2 erstreckt. Bei dem in der Zeichnung dargestellten Ausführungsbeispiel liegt das Ende des zweiten Röhrenbereichs 1b an einer vertikalen, äußeren Fahrzeugwand an.

Der zweite Röhrenbereich 1b ist vorzugsweise mit dem ersten Röhrenbereich 1a fluidisch verbunden, so dass der erste und der zweite Röhrenbereich 1a, 1b gemeinsam über die Ventilanordnung 7 mit unter Überdruck befindlichem Gas aufblasbar sind.

Die in den Fig. 1 bis 4 dargestellten Ausführungsbeispielen eines erfindungsgemäßen Vorzelts umfassen zumindest jeweils zwei in Längsrichtung des Fahrzeugs 2 voneinander beabstandete erste Röhrenbereiche 1a und zweite Röhrenbereiche 1b, die fluidisch miteinander verbunden sein können, so dass sie mit einer einzigen Ventilanordnung 7 mittels eines gegenüber dem Umgebungsdruck unter Überdruck befindlichen Gases aufblasbar sind. Die Flächen zwischen den beiden ersten Röhrenbereichen und den beiden zweiten Röhrenbereichen sind vorzugsweise von flexiblem, beispielsweise textilem Tuchmaterial gebildet, welches stoffschlüssig mit den ersten und zweiten Röhrenbereichen und dem gesamten Rahmen 1 verbunden sein kann. Auch ist es möglich, das Tuchmaterial und den Rahmen 1 derart auszubilden, dass es wahlweise an dem Rahmen 1 befestigbar und von diesem trennbar ist. Auch können sich quer zur Längsrichtung des Fahrzeugs erstreckende Seitenwände aus flexiblem Material, beispielsweise wiederum aus Tuchmaterial vorgesehen sein, die sowohl jeweils mit einem der ersten und zweiten Röhrenbereiche verbunden oder verbindbar und mit einer Seitenwand des Fahrzeugs zumindest annähernd in Anlage oder auch mit dieser verbindbar sind.

Bei dem in den Fig. 1 bis 3 dargestellten Ausführungsbeispiel des erfindungsgemäßen Vorzelts sind die zweiten Röhrenbereiche 1b und die zwischen ihnen befindliche Fläche durch ein Markisentuch 5 abgedeckt. Es erstreckt sich zwischen einer Endleiste 5a, die sich über zwei Stützbeinen, jeweils an einem Längsende der Endleiste 5a angeordnet, am Untergrund U abstützt, und einem Gehäuse 5c, welches an der Seitenwand des Fahrzeugs 2 befestigt ist. Die Endleiste 5a, die Stützbeine 5b und das Gehäuse 5c können Teil einer Gelenkarmmarkise sein, bei welcher die Endleiste 5a über meist federkraftbeaufschlagte Gelenkarme, die in der Zeichnung nicht dargestellt sind, mit dem Gehäuse 5c verbunden ist. Derartige Gelenkarmmarkisen gehören in unterschiedlichen Bauformen zum Stand der Technik.

Um den Raum unterhalb des Markisentuchs auch bei Fahrzeugen unterschiedlicher Höhen H1, H2, H3 ausnutzen zu können, sind die ersten Röhrenbereiche 1a des Rahmens 1 mit einem ersten Mittel zur Längenveränderung 3 und einem zweiten Mittel zur Längenveränderung 4 versehen. Jedes der Mittel zur Längenveränderung 3, 4 umfasst einen dritten Röhrenbereich 3a, 4a mit zwei voneinander beabstandeten Enden 3b, 3c; 4b, 4c, wobei an dem ersten Ende 3b; 4b; ein erstes Verbindungsmittel 3d; 4d und an dem zweiten Ende mindestens ein zweites Verbindungsmittel 3e; 4e vorgesehen ist, wobei die ersten und zweiten Verbindungsmittel 3d, 3e; 4d, 4e komplementär ausgebildet sind, so dass die ersten und zweiten Enden 3b, 3c; 4b, 4c wahlweise mittels der ersten und zweiten Verbindungsmittel entweder verbindbar oder voneinander trennbar sind.

Bei den in der Zeichnung dargestellten Ausführungsbeispielen des erfindungsgemäßen Vorzelts sind die ersten Verbindungsmittel 3d; 4d als jeweils erste Teile und die zweiten Verbindungsmittel 3e; 4e als jeweils zum ersten Teil komplementärer Teil eines Reißverschlusses ausgebildet. Durch Öffnen und Schließen des jeweiligen Reißverschlusses lässt sich somit die Länge des ersten Röhrenbereichs 1a um die jeweilige Länge des dritten Röhrenbereichs 3a; 4a zwecks Anpassung der Höhen H1, H2, H3 an die jeweilige Fahrzeughöhe verändern.

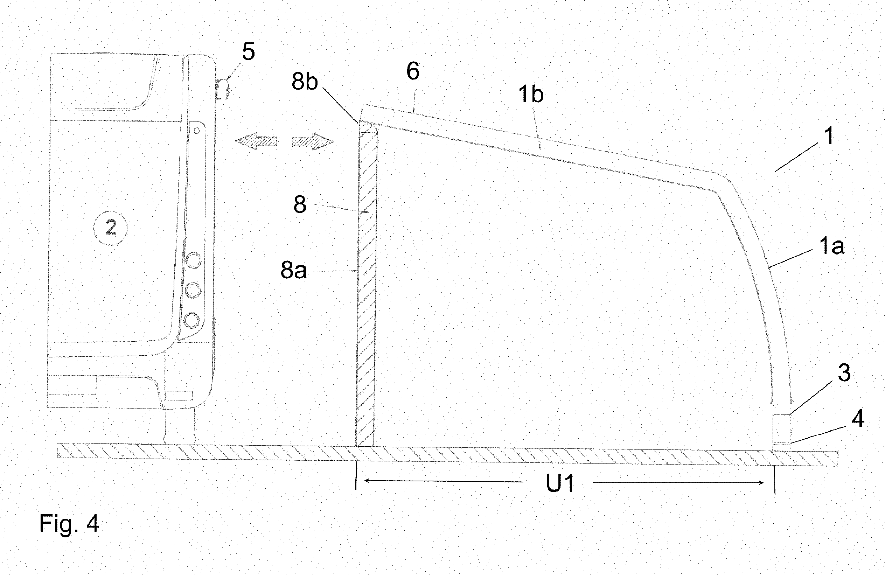

In Fig. 4 ist ein weiteres Ausführungsbeispiel 200 eines erfindungsgemäßen Vorzelts dargestellt. Gegenüber dem Ausführungsbeispiel 100, auf dessen Beschreibung zwecks Vermeidung von Wiederholungen verwiesen wird, weist das Vorzelt 200 folgende Unterschiede auf:
Zunächst sind in Längsrichtung des Fahrzeugs 2 voneinander beabstandete Stützpfosten 8 vorgesehen. Diese sind vorzugsweise am fahrzeugseitigen Ende der zweiten Röhrenbereiche 1b angeordnet. Die Stützpfosten können röhrenförmig ausgebildet und zur Ausbildung ihrer Stabilität mittels eines gegenüber dem Umgebungsdruck unter einem Überdruck befindlichen Gases aufblasbar sein, analog zum Rahmen 1. Stützpfosten 8 sind mit Befestigungsmitteln wahlweise an dem zweiten Röhrenbereich befestigbar oder von diesem Röhrenbereich trennbar ausgebildet. Hierzu umfassen bei dem Ausführungsbeispiel 200 die Stützpfosten an ihren oberen Enden jeweils einen Teil und die zweiten Röhrenbereiche 1b an den der zugewandten Wand des Fahrzeugs 2 befindlichen Enden jeweils einen zweiten Teil eines Reißverschlusses 8b.

Ferner erstreckt sich in Längsrichtung des Stützpfostens A ein Teil eines weiteren Reißverschlusses 8a, mittels welchem ein Rand einer in der Zeichnung nicht dargestellten Seitenwand des Vorzelts, an welchem der komplementäre Teil des Reißverschlusses vorgesehen ist, befestigbar ist.

Aufgrund der Ausgestaltung mit Stützpfosten 8 erhält das Vorzelt 200 eine selbständig, d.h. ohne Fahrzeug stehende Eigenschaft, so dass es bei einer Nutzung des Fahrzeugs am Standort verbleiben kann.

Ferner umfasst das Vorzelt 200 in den zweiten Röhrenbereichen 1b Mittel zur Längsverstellung 6, die analog zu den Mitteln der Längsverstellung des ersten Röhrenbereichs 1a ausgebildet sind, so dass auf deren vorstehende Beschreibung zwecks Vermeidung von Wiederholungen verwiesen werden soll. In zu den ersten Röhrenbereichen 1a analoger Weise können somit auch die Längen der zweiten Röhrenbereiche 1b verändert werden.

Es versteht sich, dass die Mittel zur Längenveränderung 6 in den zweiten Röhrenbereichen auch ohne Vorhandensein eines Stützpfostens 8 und ohne dass die ersten und zweiten Mittel zur Längenveränderung 3, 4 verwirklicht sind, vorgesehen sein können.

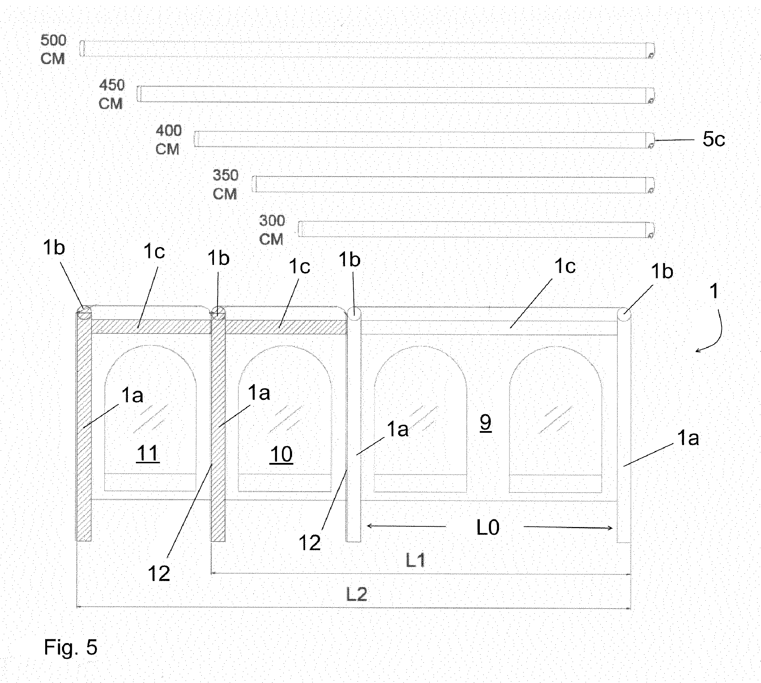

Das weitere, in Fig. 5 dargestellte Ausführungsbeispiel 300 eines erfindungsgemäßen Vorzeltes kann wie zuvor beschrieben, ausgebildet sein. Zwecks Vermeidung von Wiederholungen sei daher zunächst auf die entsprechenden Ausführungen verwiesen. Zur Anpassung der Länge des Vorzeltes an die Länge des Fahrzeugs bzw. an die Länge des an diesem angebrachten Markisengehäuses 5c ist das Vorzelt 300 modular aufgebaut. Es umfasst ein Grundmodul 9, welches einen Rahmen 1 mit jeweils zwei voneinander beabstandeten ersten Röhrenbereichen 1a und zweiten Röhrenbereichen 1b aufweist. Die Röhrenbereiche 1a, 1b sind über einen quer, d.h. parallel zur Längsrichtung des Fahrzeugs verlaufenden dritten Röhrenbereich 1c fluidisch miteinander verbunden. Ferner umfasst das Vorzelt 300 ein erstes Erweiterungsmodul 10 und ein zweites Erweiterungsmodul 11. Jedes dieser beiden Erweiterungsmodule weist einen ersten Röhrenbereich 1a, einen zweiten Röhrenbereich 1b und einen dritten Röhrenbereich 1c auf. Das Grundmodul 9 und die ersten und zweiten Erweiterungsmodule 10, 11 sind miteinander verbindbar, indem Frontseite und Dach des jeweiligen Erweiterungsmoduls 10, 11 bildendes Tuchmaterial am Rand mit einem Teil eines Reißverschlusses 12 versehen sind, welcher mit einem komplementären, am Grundmodul oder jeweils anderen Erweiterungsmodul vorgesehenen zweiten Teil des Reißverschlusses 12 in Eingriff gebracht wird.

Das in Fig. 5 dargestellte Vorzelt 300 umfasst ein Grundmodul 9 sowie zwei Erweiterungsmodule 10, 11, wodurch durch Zufügen oder Entfernen von Erweiterungsmodulen Vorzeltlängen von L0, L1 und L2 bereitgestellt werden können. Es versteht sich, dass auch weitere Erweiterungsmodule oder solche anderer Längen zur Bereitstellung von Vorzelten anderer Längen vorgesehen sein können.

### Bezuaszeichenliste:

- 100, 200, 300: Vorzelt
- 1: Rahmen
- 1a: erster Röhrenbereich
- 1b: zweiter Röhrenbereich
- 2: Fahrzeug
- 3: erste Mittel zur Längenveränderung
- 3a: dritter Röhrenbereich
- 3b: erstes Ende
- 3c: zweites Ende
- 3d: erstes Verbindungsmittel
- 3e: zweites Verbindungsmittel
- 4: zweite Mittel zur Längenveränderung
- 4a: dritter Röhrenbereich
- 4b: erstes Ende
- 4c: zweites Ende
- 4d: erstes Verbindungsmittel
- 4e: zweites Verbindungsmittel
- 5: Markisentuch
- 5a: Endleiste
- 5b: Stützbeine
- 5c: Gehäuse
- 6: dritte Mittel zur Längenveränderung
- 7: Ventilanordnung
- 8: Stützpfosten
- 8a: Reißverschluss
- 8b: Reißverschluss
- 9: Grundmodul
- 10: erstes Erweiterungsmodul
- 11: zweites Erweiterungsmodul
- 12: Reißverschluss
- A: Ansicht
- H1, H2, H3: Höhen
- L0, L1, L2: Längen
- U: Untergrund
- U1: geschützter Bereich

## Patentansprüche

1. Vorzelt (100, 200, 300) für ein Fahrzeug (2), insbesondere für einen Wohnwagen oder ein Wohnmobil, welches über einem Untergrund einen zusätzlichen geschützten Bereich zu dem Fahrzeug (2) bildet,
mit einem röhrenförmigen Rahmen (1), der zur Ausbildung von Stabilität mittels eines gegenüber einem Umgebungsdruck unter einem Überdruck befindlichen Gases aufblasbar ist,
wobei der röhrenförmige Rahmen (1) zumindest einen sich von dem Untergrund (U) nach oben erstreckenden ersten Röhrenbereich (1a) mit einer ersten Länge umfasst,
und zumindest der erste Röhrenbereich (1a) Mittel zur Veränderung seiner Länge (3, 4) umfasst,
**dadurch gekennzeichnet,**
**dass** die Mittel zur Längenänderung (3, 4, 6) einen dritten Röhrenbereich (3a, 4a) mit zwei voneinander entfernten ersten und zweiten Enden (3b, 3c; 4b, 4c) aufweisen, wobei an den ersten Enden (3b; 4b) mindestens ein erstes Verbindungsmittel (3d; 4d) und an den zweiten Enden (3c; 4c) mindestens ein zweites Verbindungsmittel (3e; 4e) vorgesehen ist, wobei die ersten und zweiten Verbindungsmittel komplementär ausgebildet sind, so dass die ersten und zweiten Enden (3b, 3c; 4b, 4c) des dritten Röhrenbereichs (3a, 4a) mittels der ersten und zweiten Verbindungsmittel (3d, 3e; 4d, 4e) verbindbar und voneinander trennbar sind.

2. Vorzelt nach Anspruch 1, **dadurch gekennzeichnet, dass** das Vorzelt zusätzlich zumindest einen zwischen dem ersten Röhrenbereich (1a) und dem Fahrzeug (2) anordenbaren zweiten Röhrenbereich (1b) mit einer zweiten Länge umfasst.

3. Vorzelt nach Anspruch 2, **dadurch gekennzeichnet, dass** der zweite Röhrenbereich (1b) Mittel zur Veränderung seiner Länge (6) umfasst.

4. Vorzelt nach einem der voranstehenden Ansprüche, **dadurch gekennzeichnet, dass** das erste Verbindungsmittel (3d; 4d) ein erster Teil und das zweite Verbindungsmittel (3e; 4e) ein zum ersten Teil komplementärer Teil eines Klettverschlusses, einer Druckknopfverbindung, einer Haken/Ösenverbindung oder eines Reißverschlusses ist.

5. Vorzelt nach einem der Ansprüche 2 und 3 oder Anspruch 4, wenn rückbezogen auf einen der Ansprüche 2 oder 3, **dadurch gekennzeichnet, dass** zumindest eines der ersten und des zweiten Röhrenbereichs (1a, 1b) mindestens zwei in Richtung der Länge des jeweiligen Bereichs voneinander beabstandete Mittel (3, 4) zur Längenveränderung aufweist.

6. Vorzelt nach einem der voranstehenden Ansprüche, **dadurch gekennzeichnet, dass** das Vorzelt (300) mehrere Module (9, 10, 11) mit jeweils einem eigenen röhrenförmigen Rahmen (1), der zur Ausbildung von Stabilität mittels eines gegenüber dem Umgebungsdruck unter einem Überdruck befindlichen Gases beaufschlagbar ist, umfasst, wobei der Rahmen (1) eines jeden Moduls (9, 10, 11) zumindest einen ersten Röhrenbereich (1a) umfasst, und wobei die Module mit Hilfe von komplementären Anschlussmitteln miteinander verbindbar und voneinander trennbar sind.

7. Vorzelt nach Anspruch 6, **dadurch gekennzeichnet, dass** die komplementären Anschlussmittel Teile eines Klettverschlusses, einer Druckknopfverbindung, einer Haken/Ösenverbindung oder eines Reißverschlusses (12) sind.

8. Vorzelt nach einem der Ansprüche 2 bis 7, **dadurch gekennzeichnet, dass** das Vorzelt (200) einen am fahrzeugseitigen Ende des mindestens einen zweiten Röhrenbereichs (1b) vorgesehenen Stützpfosten (8) umfasst.

9. Vorzelt nach Anspruch 8, **dadurch gekennzeichnet, dass** der mindestens eine Stützpfosten (8) röhrenförmig ausgebildet und zur Ausbildung seiner Stabilität mittels eines gegenüber dem Umgebungsdruck unter einem Überdruck befindlichen Gases aufblasbar ist.

10. Vorzelt nach Anspruch 8 oder 9, **dadurch gekennzeichnet, dass** der mindestens eine Stützpfosten (8) mit Befestigungsmitteln wahlweise an dem zweiten Röhrenbereich (1b) befestigbar und von dem zweiten Röhrenbereich (1b) trennbar ist.

11. Vorzelt nach Anspruch 10, **dadurch gekennzeichnet, dass** die Befestigungsmittel einen Klettverschluss, eine Druckknopfverbindung, eine Haken/Ösenverbindung oder einen Reißverschluss (8a, 8b) umfassen.

## Claims

1. Awning (100, 200, 300) for a vehicle (2), in particular for a caravan or a mobile home, which forms an additional protected region to the vehicle (2) over a surface,
comprising a tubular frame (1) that can be inflated in order to create stability by means of a gas which is under an overpressure compared with an ambient pressure,
the tubular frame (1) comprising at least one first tubular region (1a) that extends upward from the surface (U) and has a first length,
and at least the first tubular region (1a) comprising means for changing its length (3, 4),
**characterized in that**
the length-changing means (3, 4, 6) comprise a third tubular region (3a, 4a) having two mutually remote first and second ends (3b, 3c; 4b, 4c), at least one first connecting means (3d; 4d) being provided at the first ends (3b; 4b) and at least one second connecting means (3e; 4e) being provided at the second ends (3c; 4c), the first and second connecting means being designed to be complementary, such that the first and second ends (3b, 3c; 4b, 4c) of the third tubular region (3a, 4a) can be connected to and separated from one another by means of the first and second connecting means (3d, 3e; 4d, 4e).

2. Awning according to claim 1, **characterized in that** the awning additionally comprises at least one second tubular region (1b) that can be arranged between the first tubular region (1a) and the vehicle (2) and has a second length.

3. Awning according to claim 2, **characterized in that** the second tubular region (1b) comprises means for changing its length (6).

4. Awning according to one of the preceding claims, **characterized in that** the first connecting means (3d; 4d) is a first part, and the second connecting means (3e; 4e) a part complementary to the first part, of a hook and loop fastener, a snap fastener, a hook and eye connection, or a zipper.

5. Awning according to one of claims 2 and 3 or claim 4 when dependent on one of claims 2 or 3, **characterized in that** at least one of the first and second tubular regions (1a, 1b) has at least two length-changing means (3, 4) spaced apart from one another in the direction of the length of the relevant region.

6. Awning according to one of the preceding claims, **characterized in that** the awning (300) has a plurality of modules (9, 10, 11), each of which has its own tubular frame (1) that can be acted on by a gas that is under an overpressure compared with the ambient pressure in order to create stability, the frame (1) of each module (9, 10, 11) comprising at least one first tubular region (1a), and it being possible for the modules to be connected to and separated from one another with the aid of complementary joining means.

7. Awning according to claim 6, **characterized in that** the complementary joining means are parts of a hook and loop fastener, a snap fastener, a hook and eye connection, or a zipper (12).

8. Awning according to one of claims 2 to 7, **characterized in that** the awning (200) comprises a support post (8) provided at the vehicle end of the at least one second tubular region (1b).

9. Awning according to claim 8, **characterized in that** the at least one support post (8) is tubular and can be inflated in order to create stability by means of a gas which is under an overpressure compared with the ambient pressure.

10. Awning according to one of claims 8 or 9, **characterized in that** the at least one support post (8) can be selectively fastened to the second tubular region (1b) and separated from the second tubular region (1b) via fastening means.

11. Awning according to claim 10, **characterized in that** the fastening means comprise a hook and loop fastener, a snap fastener, a hook and eye connection, or a zipper (8a, 8b).

## Revendications

1. Auvent (100, 200, 300) destiné à un véhicule (2), en particulier à une caravane ou un camping-car, qui forme une région de protection supplémentaire pour le véhicule (2) au-dessus du sol,
comportant un cadre tubulaire (1) qui peut être gonflé au moyen d'un gaz en surpression par rapport à la pression ambiante afin de créer une stabilité,
dans lequel le cadre tubulaire (1) comprend au moins une première région tubulaire (1a) s'étendant vers le haut depuis le sol (U) et comportant une première longueur,
et au moins la première région tubulaire (1a) comprend des moyens permettant de modifier sa longueur (3, 4),
**caractérisé en ce**
**que** les moyens de modification de longueur (3, 4, 6) présentent une troisième région tubulaire (3a, 4a) comportant deux premières et secondes extrémités (3b, 3c; 4b, 4c) espacées les unes des autres, au moins un premier moyen de liaison (3d; 4d) étant prévu aux premières extrémités (3b ; 4b) et au moins un second moyen de liaison (3e; 4e) étant prévu aux secondes extrémités (3c; 4c), les premier et second moyens de liaison étant conçus de façon complémentaire, de sorte que les premières et secondes extrémités (3b, 3c; 4b, 4c) de la troisième région tubulaire (3a, 4a) peuvent être reliées et séparées les unes des autres au moyen des premier et second moyens de liaison (3d, 3e; 4d, 4e).

2. Auvent selon la revendication 1, **caractérisé en ce que** l'auvent comprend en outre au moins une deuxième région tubulaire (1b) d'une deuxième longueur qui peut être disposée entre la première région tubulaire (1a) et le véhicule (2).

3. Auvent selon la revendication 2, **caractérisé en ce que** la deuxième région tubulaire (1b) comprend des moyens de changement de sa longueur (6).

4. Auvent selon l'une des revendications précédentes, **caractérisé en ce que** le premier moyen de liaison (3d; 4d) est une première partie et le second moyen de liaison (3e; 4e) est une partie, complémentaire à la première partie, d'une fermeture velcro, d'un bouton-pression, d'une liaison crochet/œillet ou d'une fermeture éclair.

5. Auvent selon l'une des revendications 2 et 3 ou la revendication 4 lorsqu'elle dépend de l'une des revendications 2 ou 3, **caractérisé en ce qu'**au moins l'une des première et deuxième régions tubulaires (1a, 1b) présente au moins deux moyens (3, 4) espacés l'un de l'autre dans la direction de la longueur de la région respective et permettant de modifier la longueur.

6. Auvent selon l'une des revendications précédentes, **caractérisé en ce que** l'auvent (300) comprend plusieurs modules (9, 10, 11) comportant respectivement leur propre cadre tubulaire (1) pouvant être sollicité par un gaz en surpression par rapport à la pression ambiante afin de créer une stabilité, le cadre (1) de chaque module (9, 10, 11) comprenant au moins une première région tubulaire (1a), et les modules pouvant être reliés et séparés les uns des autres à l'aide de moyens de raccord complémentaires.

7. Auvent selon la revendication 6, **caractérisé en ce que** les moyens de raccord complémentaires font partie d'une fermeture velcro, d'un bouton-pression, d'une liaison crochet/œillet ou d'une fermeture éclair (12).

8. Auvent selon l'une des revendications 2 à 7, **caractérisé en ce que** l'auvent (200) comprend un poteau de support (8) prévu sur l'extrémité côté véhicule de l'au moins une deuxième région tubulaire (1b).

9. Auvent selon la revendication 8, **caractérisé en ce que** l'au moins un poteau de support (8) est conçu de façon tubulaire et peut être gonflé au moyen d'un gaz en surpression par rapport à la pression ambiante afin de créer sa stabilité.

10. Auvent selon la revendication 8 ou 9, **caractérisé en ce que** l'au moins un poteau de support (8) peut être sélectivement fixé à la deuxième région tubulaire (1b) au moyen de moyens de fixation et peut être séparé de la deuxième région tubulaire (1b).

11. Auvent selon la revendication 10, **caractérisé en ce que** les moyens de fixation comprennent une fermeture velcro, un bouton-pression, une liaison crochet/œillet ou une fermeture éclair (8a, 8b).
